# EUROPEAN PATENT APPLICATION

(11) **EP 2 870 953 A1**
(43) Date of publication of application: **13.05.2015**
(21) Application number: 12831310.3
(22) Date of filing: 09.07.2012
(51) Int. Cl.: A61G 5/06, B62B 5/02

(54) **TRANSPORTATION DEVICE FOR TRANSPORTING GOODS AND PEOPLE ON STAIRS AND FLAT SURFACES**

(71) Applicant: Osipov, Sergey Surenovich, Moscow 143965 (RU)
(72) Inventor: ARSENICH, Svyatoslav Ivanovich, Moskovskaya obl. 143965 (RU); SIBIL, Yuriy Aleksandrovich, Moskovskaya obl. 141075 (RU)
(74) Representative: Bucher, Ralf Christian
(86) International application number: PCT/RU2012/000554
(87) International publication number: WO 2013/039425

(57) **Abstract**

The invention relates to devices for transporting goods and people on stairs and flat surfaces and, in particular, to occupied wheelchairs. The transportation device comprises a frame, to which a seat for accommodating an individual is secured from above, and a lifting mechanism. Individual longitudinal horizontal guides are fastened to the front, the back, the left and the right of the frame respectively, each guide having an angular wheel support secured thereon in such a way as to be movable in a longitudinal horizontal direction, and a drive for the longitudinal horizontal movement of the support along the frame in order to adjust the length of the longitudinal base between the axles of a pair of crosspieces. A wheeled undercarriage is comprised of four crosspieces with supporting running wheels on each arm of each crosspiece. A horizontal pivot shaft with a running supporting wheel immovably fastened thereto is fastened to the end of each crosspiece arm, perpendicular to the axis of the arm. The axle of each crosspiece is connected by a mechanical gear to a drive for rotating the crosspiece in question via the axle. A steering system is mounted on the frame, wherein for each arm a wheel axle is disposed on a longitudinal axle mounted along the end of the arm such that the wheel axle is able to rotate about the longitudinal axle. The longitudinal axle is mechanically connected to the steering system for the simultaneous rotation of all of the wheels on one pair of crosspieces or on all of the crosspieces at once.

## Description

### 1. Field of the invention

The present invention relates to devices for transporting goods or people on flat surfaces as well as for ascending and descending footsteps of stairs, escalators and other vehicles. In particular, the present invention can find application for the self-reacting transportation of heavy weights by a single servicing man without physical muscular efforts or for the self-reacting transportation of an invalid chair accommodating an individual unable to walk, providing self-service without any servicing man.

### 2. Background of the invention

It is known a hand cart for transporting goods on stairs and flat surfaces (patent RU No 2095266 C1, priority of 12.11.1993, for the invention "Hand cart for moving on stairs", author I.I. Taranukha). The cart comprises a frame with a handle, running and supporting wheels and roller slides with a row of supporting rolls resting on the edge of stair footsteps while ascending or descending stairs. Roller slides are used when moving across flat surfaces.

This cart enables to reduce physical efforts while lifting goods on stairs and provides for a uniform speed of descent.

A drawback of this prior art is the need to use high physical efforts of the servicing man for the manual traction of this cart up and down on stairs and flat surfaces. That is why such carts cannot be used for a self-reacting transportation of invalid chairs or with the physical efforts of the invalids themselves or with the use of electric drives.

Said drawbacks of this prior art are caused by an insufficient grip of rollers on the cart slides with the edge of stair footsteps, which results in dangerous rolling down of the cart from the stairs, when it is not retained by a servicing person.

The closest prior art to the vehicle of the present invention as to the technical essence and the functional destination is a device for transporting upstairs goods and/or an invalid chair accommodating an individual, see patent RU No 2201367 C2 of 17.11.1998 for the invention "Device for ascending stairs, driven by a motor", author Karsten Bernt. The device is driven by a motor and is configured to transport utensils and goods detachably attached on the same to lift, in particular, invalid chairs carrying individuals unable to walk. The device comprises: a high-strength frame provided with a power source, a driving force source, a system of drive control, feelers and detectors, as well as mechanisms for ascending stairs. On the frame bottom, two traveling wheels are mounted on the left and on the right of the same, said wheels serving for the frame to rest on the upper and the lower footsteps of the stairs. To allow the supporting process directed mainly vertically to the stairs footsteps surface, a supporting arrangement is mounted on the frame, a free end of which bears, as lifting mechanics, a pivot crosspiece with two or three running wheels is mounted, driven by a motor, the drive being synchronized with the lifting mechanisms to provide ascent on stairs with the help of the running wheels of said crosspiece, when said crosspiece is turned. While transporting on a flat surface, the supporting arrangement is thrown up to get below the load to be transported, in particular under the invalid chair. To provide maximum reliability and stability when a device with goods or an invalid chair carrying a subject are lifted on stairs, the lifting mechanisms are proposed in the form of a supporting leg performing vertical motion and resting on the surface of the stair footsteps, close to the center of the horizontal surface of said footsteps. The arrangement bears feelers-detectors in the form of contact bars that operate only when the arrangement is situated near the next edge of the stair footstep, and put into operation the source of the driving force, performing a following step upstairs.

The technical result of said closest prior art is to provide a light-weight, small-sized arrangement attachable with the possibility to be removed on any transported goods, in particular on wheelchairs having a high security degree.

An important drawback of the closest prior art is that the possibility of a secure lifting and descent for transported goods and for invalid chairs on stairs is provided with the help of an arrangement supported and controlled manually by a servicing person (to maintain the arrangement against an accidental overturning on stairs). It excludes any possibility of a remote or self-reacting transportation or of control for a wheelchair by the same subject sitting in this wheelchair. Transportation on stairs of a wheelchair is carried out only without comfort due to an important inclination of the wheelchair with a subject inside.

The above mentioned drawbacks are related to the location of the vertical line for the common gravity center close to the axe of the supporting traveling wheel pair, which is the cause of a low steadiness for the transporting device on stairs and leads to an uncontrolled accidental running down and falling from stairs, as well as of a low steadiness on stairs of the construction of the arrangement supporting goods or a wheelchair.

### Summary of the invention

**The task** of the present invention is to provide a steady and secure transporting device for a comfortable, steady and secure transportation of goods or of an individual in a wheelchair on stairs without any accompanying attendant while going up and down on footsteps of stairs, escalators and other vehicles, as well as while moving across a horizontal and inclined flat surface.

**The object** of the invention according to claim 1 is to simplify the construction of a cargo vehicle or an occupied wheelchair as a result of providing on the vehicle a universal wheeled undercarriage to move on a flat surface, as well as to go up and down stairs only on running supporting wheels. An additional object is to provide a failure-proof transporting of goods or of an individual in an occupied wheelchair thanks to an increased number of supporting running wheels and to a controllable setting of the same at optimal points of rest on footsteps in the procedure of ascent or descent of said transportation device on footsteps of stairs, escalators or other vehicles. Another additional object providing the increase of steadiness on the stair footsteps is to develop a structure for regulating the optimal position of the common center of gravity for the transportation device supporting goods or an individual relative to the center of the wheel support surface on said footsteps.

**An additional technical effect** obtained according to claim 2 is the increase in steadiness of the transportation device as a result of an automatic regulation of the length of the crosspiece arms to provide optimal distances between the running supporting wheels and the crosspiece axles with the measure of the distances from each wheel resting on a footstep to the vertical wall of the closest footstep.

**Another additional technical effect** obtained according to claim 3 is the increase in steadiness of the transportation device on stairs and escalators as a result of an automated blocking against any spontaneous rotation in the reverse direction of the running supporting wheels.

**Another additional technical effect** obtained according to claim 4 is the provision of a permanent comfortable vertical position of the individual during the process of ascending and descending footsteps of stairs, escalators and other vehicles and while moving across a flat surface, thanks to a lower position of the gravity center for a chair with an individual, relative to the points of lateral supports of this chair on the frame with the possibility to independently keep the constant vertical position of the same, like in the case of a pendulum.

**Another additional technical effect** obtained according to claim 5 is the increase in steadiness of a wheelchair on stairs or on an escalator thanks to a longitudinal displacement of the chair with an individual into the area of the optimal point in the bearing surface area on the running wheels. In cargo vehicles, the increase in steadiness of the vehicle is provided by structural elements enabling horizontal leveling of the goods carrying structure and by the horizontal position of the goods on the same while ascending and descending stairs or escalators.

**Another additional technical effect** obtained according to claim 6 is the possibility to provide a mechanized lifting of heavy and/or large-sized goods from the floor or ground level or from another accessible level, and the possibility to provide mechanized unloading of said goods or to transfer an individual to another seat.

**Another additional technical effect** obtained according to claim 7 is the improved maneuverability of the transportation device on a small surface area.

**Another additional technical effect** obtained according to claim 8 is the possibility to improve the steadiness of the transportation device while ascending and descending footsteps of stairs, escalators and other vehicles thanks to turning the running supporting wheels to a position parallel to the length of stair footsteps, the rotation of said wheels being blocked.

**Another additional technical effect** obtained according to claim 9 is a good comfort in the control of the transportation of goods or of an individual in a wheelchair with the help of an electric accumulator, electric motors and electric drives, as well as of a panel for programmed control of said transportation device.

**The object of the present invention is achieved by the fact that** the transportation device for transporting goods on stairs and flat surfaces with a cargo vehicle or a disabled individual in a wheelchair comprises a high-strength frame. The frame of a cargo vehicle accommodates a goods-supporting structure providing fastening of goods. On the frame for a wheel-chair, a chair is fixed for accommodating an individual. Such frames of the transportation devices accommodate a secured wheeled undercarriage with running supporting wheels able to rotate in any direction, and a lifting mechanism to lift the transportation device on the footsteps of stairs, escalators and other vehicles. The lifting mechanism comprises mechanical or electrical drives with a system to control these drives providing the travel of said transportation device and to regulate the lifting mechanism and the wheeled undercarriage. On the bottom part of said frame, a horizontal sheering axle is secured, this axle supporting a three-arm crosspiece immovably secured to the same, presenting three similar arms immovably secured on a pivot of their crosspiece and arranged in the vertical plane with radial angles of 120° between said arms. A horizontal pivot shaft is secured on the end of each arm perpendicularly to its longitudinal axis. A running supporting wheel is immovably secured on this shaft with the possibility for this wheel axle to be rotated in any direction for providing rolling of said transportation device on these running wheels. The drive is mechanically linked to the crosspiece shaft to rotate the same during the processes of ascending or descending the transportation device on footsteps of stairs as a result of the transportation device resting on footsteps of stairs and escalators with its running and supporting wheels.

**The essential features** characterizing the transportation device are as follows: the wheeled undercarriage is made of four three-armed crosspieces with running supporting wheels on each arm of each crosspiece. On the left-side and the right-side of the frame front, as well as on the left-side and on the right-side of the frame back, individual horizontal longitudinal guides are fastened. Each guide bears a wheel support secured thereon in the form of an angle, such that it may move in the horizontal and longitudinal direction, the horizontal part of the support being located in this guide. On the lower end of the vertical part of the wheel support, a horizontal pivot shaft is fastened which supports said three-armed crosspiece immovably fastened thereto. On each guide, a manual mechanical or hydraulic or electric drive is located for moving the wheel support along the frame longitudinally and horizontally (to control the length of the longitudinal left and right bases between the crosspiece pair shafts on the left), to provide steadiness by putting all the running wheels to the points of a failure-proof rest for said wheels on the footsteps of stairs, escalators and other vehicles, as well as for transferring the gravity center of the transportation device (with goods or an individual in the chair) in the direction from the center of the bearing surface area to the running wheels upstairs. The shaft of each crosspiece is linked by a mechanical transmission with the mechanical or electric drive to provide a self-reacting or synchronous rotation of the respective crosspiece by said shaft. A steering system is mounted on the frame to provide the self-reacting steering (by a servicing man or a subject sitting in the chair) of the front and/or back supporting and running pairs. For this purpose, the wheel axle is mounted on the end of the longitudinal axis of the arm with the possibility of rotation for the wheel axle with the wheel in the plane perpendicular to the longitudinal axis of the arm. This longitudinal axle is mechanically linked to the steering system to provide a synchronous steering of all the wheels on one pair of crosspieces or on all the crosspieces simultaneously.

According to **claim 2** of the present invention, the transportation device is characterized in that each arm of all the crosspieces is made with the possibility to provide synchronous simultaneous regulation of the length for all the arms in each crosspiece. For this purpose, each arm of each crosspiece is made with a mechanical or hydraulic or electric drive to lengthen or to shorten the arm length, the distance between the axles of each running wheel and the shaft of its crosspiece being respectively lengthened or shortened. In front of each running supporting wheel, on each arm of the crosspieces, a feeler is fixed to contact the edges of footsteps on stairs, escalators and other vehicles and to provide a control signal of the value of the distance from this wheel to said edge. The transportation device bears an automatic regulator linked to all the feelers to receive these control signals, and linked to all the drives regulating the arm length and linked to the drives for a longitudinal and horizontal moving of the wheel supports. The automatic regulator is designed to provide automatic regulation, on the signals of feelers, of the length of the longitudinal left and right bases between the crosspieces shafts, respectively, from the left and right sides. This fact enables an automatic positioning of all the supporting running wheels closer to the vertical wall of footsteps to increase the steadiness of the transporting device while going up and down stairs.

According to **claim 3** of the present invention, the transportation device is characterized in that the drives are provided with automatic blocking mechanisms, for example, ratchet-and-pawl mechanisms the changeover of which is made by a servicing person or an individual occupying the wheelchair. These mechanisms are designed to block the reverse motion of the crosspieces and the reverse motion of the running supporting wheels, as well as to block any emergency spontaneous or steered horizontal turning of wheels while going up and down on footsteps of stairs and while moving across a flat surface.

According to **claim 4** of the present invention, the transportation device is characterized in that the frame bears vertical legs secured on the left and on the right. A horizontal axle is secured on the upper end of each leg. On these axles, a chair for accommodating a sitting individual is secured such that this chair accommodating a sitting individual may constantly recover the vertical position of the chair with the individual in the way of a pendulum thanks to the location of the chair common gravity center below the foothold line of the same on said axles at the inclination of the transportation device while going up and down stairs.

According to **claim 5** of the present invention, the transportation device of claim 4 is characterized in that the system of supports for fastening the load-carrying structure or the chair is made, for example, with four legs having a manual or mechanical, or hydraulic, or electric semiautomatic or automatic drive. The drives are designed to modify the length of these legs with the possibility to adjust the goods disposition on the transportation device in the horizontal or vertical planes, or to adjust the vertical position of the chair accommodating an individual, and/or to control the height of these goods or of this chair accommodating an individual, and/or to displace the goods or the chair accommodating an individual along the frame for increasing steadiness of the transportation device on stairs.

According to **claim 6** of the present invention, the transportation device is characterized in that its frame is made with guides extensible in the transversal direction in order to secure the wheel supports. This fact provides for formation of an internal free space in the internal foothold area of the transportation device, in which goods or an individual may be disposed on the surface of the transportation device or in the middle of the same before lifting these goods to the load-supporting structure, or to lift and to sit an individual to the chair of the wheelchair. The extensible guides are made with a mechanical or hydraulic, or electric drive to provide their transversal extension or retraction. The frame bears a hoisting crane or a winch with a mechanism for fastening goods on the floor or ground level, or at a higher level to lift and to carry these goods or the individual onto a vehicle, or to transfer, with the use of mechanisms, the goods or the individual to another support.

According to **claim 7** of the present invention, the transportation device is characterized in that the wheeled undercarriage is made with a mechanism of horizontal steering of supporting wheels in different directions at 90 and 180 degrees. This fact explains the autonomous turn of the transportation device on the spot and/or its hairpin turn on a small area, and/or its lateral shift on footsteps of stairs and escalators. For this purpose, the transportation device comprises mechanisms for blocking rotation of axles for determined or for all the running supporting wheels.

According to **claim 8** of the present invention, the transportation device is characterized in that it bears mechanisms for blocking rotation of axles for determined or for all the running supporting wheels and its feelers are immovably secured between each wheel and the vertical wall of the closest footstep. This fact provides for a failure-proof autonomous going up and down of this transportation device on the footsteps of stairs, escalators or other vehicles thanks to the rotation of crosspieces with the wheels turned in parallel to the length of these footsteps.

According to **claim 9** of the present invention, the transportation device is characterized in that it bears a portable electric accumulator, electric reversible motors, automatic drives and a programmed panel for semiautomatic and/or automatic control of the travel direction and of the modes of transporting goods or an individual for this transportation device. This fact provides for an optimal steadiness of the transportation device while going up and down the footsteps of stairs, escalators and other vehicles, as well as for easiness and comfort in the control of said transportation device.

### Brief description of the drawings

Fig. 1 shows a mechanical diagram of a wheelchair having a left hand mechanical control (a front view in the position of moving downstairs).
Fig. 2 shows a mechanical diagram of a wheelchair having a right hand mechanical control (a rear view in the position of moving upstairs).
Fig. 3 shows a wheeled undercarriage assembly with a double supporting running wheel at the end of a crosspiece arm with a feeler.
Fig. 4 shows a three-armed crosspiece of a wheeled undercarriage with hydraulically driven extensible arms, the end of each arm bearing running supporting wheels.
Fig. 5 shows a mechanical diagram of a wheelchair (right-side view) while moved across a flat surface, having mechanical and hydraulic manual drives to control the travel and to regulate the mechanisms.
Fig. 6 shows a mechanical diagram of a wheelchair (right-side view) while moved across a flat surface, having electric drives to control the travel and to regulate the mechanisms.
Fig. 7 shows a mechanical diagram of a cargo vehicle (right-side view) with electric drives, with a horizontally balanced load while lifting the same upstairs on running supporting wheels turned parallel to the length of the stair footsteps.
Fig. 8 shows a mechanical diagram of a cargo vehicle (right-side view) while moving upstairs, having electric drives and with a horizontally balanced load, on running supporting wheels turned on the footsteps along the path of motion upstairs.
Fig. 9 shows a mechanical diagram of a cargo vehicle (right-side view) having electric drives, while moving horizontally across a flat surface.

### Embodiment of the invention

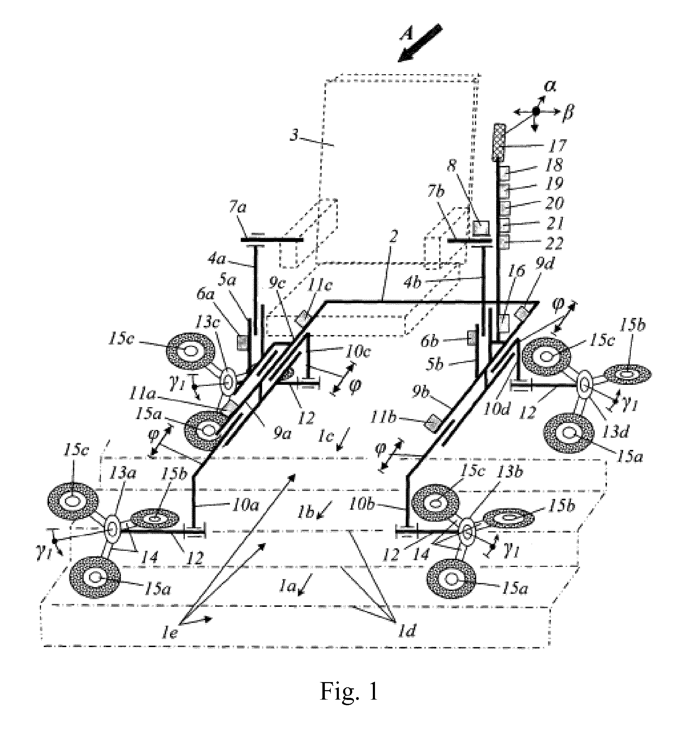

**Figures 1****,****2****,****5** **and** **6** show a wheelchair for a self-reacting transportation of a disabled individual sitting in a chair (without the wheelchair support or control by a servicing person). Applying one hand physical forces of the individual sitting in the chair, the wheelchair can move on its running supporting wheels across a flat surface and pace moving up and down the footsteps of stairs, escalators and other vehicles and using the running wheels blocked against rotation, while the crosspieces rotate. The figures show: ***1a*** is the horizontal surface of a lower stair footstep. ***1b*** is the horizontal surface of the second stair footstep located higher. ***1c*** is the horizontal surface of the third stair footstep located even higher. ***1d*** illustrates the edges of these footsteps. ***1e*** illustrates the vertical walls of these footsteps. The wheelchair comprises a high-strength frame ***2*.** The chair 3 for accommodating an individual is secured on the right hand on a right vertical leg ***4a*** and on the left hand on a left vertical leg ***4b.*** From above, on the middle part of the right side of the frame, a left vertical guide ***5a*** is immovably secured, and the left side of the frame bears a left vertical guide ***5b.*** To the upper end of each guide ***5a*** and ***5b,*** a helical gear is secured, mechanically linked to the respective legs ***4a*** and ***4b,*** mechanically linked to a manual drive for ascending and descending the chair with these legs above the frame. On the right chair rest, a right transverse horizontal axle ***7a*** is secured, the left rest bearing a left horizontal transverse axle ***7b***, on which the upper ends of the respective legs ***4a*** and ***4b*** are secured, with the possibility to turn these axles in the vertical longitudinal plane of the wheelchair for providing natural recovery of the vertical position of the chair accommodating the individual thanks to their joint gravity. To fix the vertical position, a lock 8 is placed on the axle ***7a*** or ***7b.*** Four longitudinal horizontal guides are secured on the frame: at the front, on the right side of the frame, a right front guide ***9a,*** and on the left side, a left front guide ***9b,*** at the rear, on the right side of the frame, a right rear guide ***9c,*** and on the left side, a left rear guide ***9d.*** On each of these guides, an angular wheel support is secured with the possibility for its horizontal part to move longitudinally: the guide ***9a*** bears a right front leg ***10a,*** the guide ***9b*** bears a front left leg ***10b,*** the guide **9*c*** bears a right rear leg ***10c*** and the guide ***9d*** bears a left rear leg ***10d***. In each determined guide ***9a, 9b, 9c*** and ***9d,*** a respective helical gear ***11a***, ***11b, 11c*** and **11d** is secured, mechanically linked to the wheel leg arranged in this guide and mechanically linked to a manual drive for the longitudinal horizontal motion (in the limits of the distance ϕ) of the wheel legs in their guides. On the lower end of each wheel leg ***11a***, ***11b, 11c*** and ***11d,*** one horizontal steering axle ***12*** is secured with the possibility for this axle to rotate in the vertical longitudinal plane. On the axle ***12*** of a determined wheel leg ***11a, 11b, 11c*** and ***11d,*** a three-armed crosspiece is immovably secured; respectively, the right front crosspiece ***13a,*** the left front crosspiece ***13b,*** the right back crosspiece ***13c*** and the left back crosspiece ***13d.*** On the nave of any crosspiece, three arms ***14*** are immovably secured, located in the plane perpendicular to the horizontal axle of the crosspiece, with equal radial angles between said arms. Every arm bears the movably secured longitudinal pivot shaft with the possibility of a longitudinal motion of said shaft along the arm and of said shaft rotation in the plane perpendicular to the shaft length. The end of each longitudinal shaft distant from the crosspiece axle bears, perpendicular to the length of this axle, a pivot wheel shaft is secured, supporting a single or preferably double running supporting wheel ***15*** with the possibility for this shaft to rotate its wheel in any plane longitudinal to the length of this arm. The running wheel is indicated in various motion modes with the following numbers: ***15*** for the mode of vertical rest of the wheelchair onto a wheel vertically put onto a horizontal surface, ***15a*** for the mode of vertical rest of the wheelchair onto a wheel vertically put onto a stair footstep, ***15b*** for the mode of vertical rest onto a lateral side of a wheel, ***15c*** for the idle running mode without any rest onto said wheel. The frame supports a universal mechanical drive ***16*** linked to a lever ***17.*** When the individual accommodated in the wheelchair swings the level by the arrow α, it provides for working mechanical moments converted by the drive 16 into translational or rotary motion to make operate: all the mechanical adjustment elements of the wheelchair, the modes of self-reacting transportation across a flat surface, going up and down stairs. With the use of determined ratchet-and-pawl mechanism and the lever ***17*** (swung by the arrow β), mechanical drives are put into operation and steer the necessary running supporting wheels. To regulate the horizontal longitudinal position of the wheel supports ***11a***, ***11b, 11c*** and ***11d*** about the frame, the lever ***17*** bears a secured commutator ***18*** with a two-sided ratchet-and-pawl mechanically linked to the drive ***16*** and to the helical gears ***11a*** and ***11b.*** To adjust the chair height above the frame, the lever bears a commutator ***19*** with a two-sided ratchet-and-pawl mechanically linked to the drive ***16*** and to the helical gears ***6a*** and ***6b.*** To adjust the lengths of each arm for all the crosspieces, the lever ***17*** bears a commutator 20 with a two-sided ratchet-and-pawl mechanically linked to the drive ***16*** and to a helical mechanism ***29*** to lengthen the longitudinal axis. To provide the correct rotation direction of the crosspieces ***13a, 13b, 13c, 13d*** in the vertical plane and/or to block any accidental rotation, a two-sided ratchet-and-pawl ***21*** is secured on the frame, mechanically linked to the drive ***16*** and to the axles of the crosspiece ***12*.** To make a good choice for steering the running wheels ***15, 15a, 15b***, ***15c*** in the horizontal plane or to provide blocking of an accidental steering, the lever ***17*** bears a commutator ***22*** with a two-sided ratchet-and-pawl mechanically linked to the drive ***16*** and to each transverse axle of the arm. To control the correct rotation direction of the running wheels ***15, 15a***, ***15b***, ***15c*** in the vertical plane and to provide blocking of an accidental steering, the lever ***17*** bears a commutator ***23*** with a two-sided ratchet-and-pawl mechanically linked to the drive ***16*** and to the horizontal axle of each running supporting wheel.

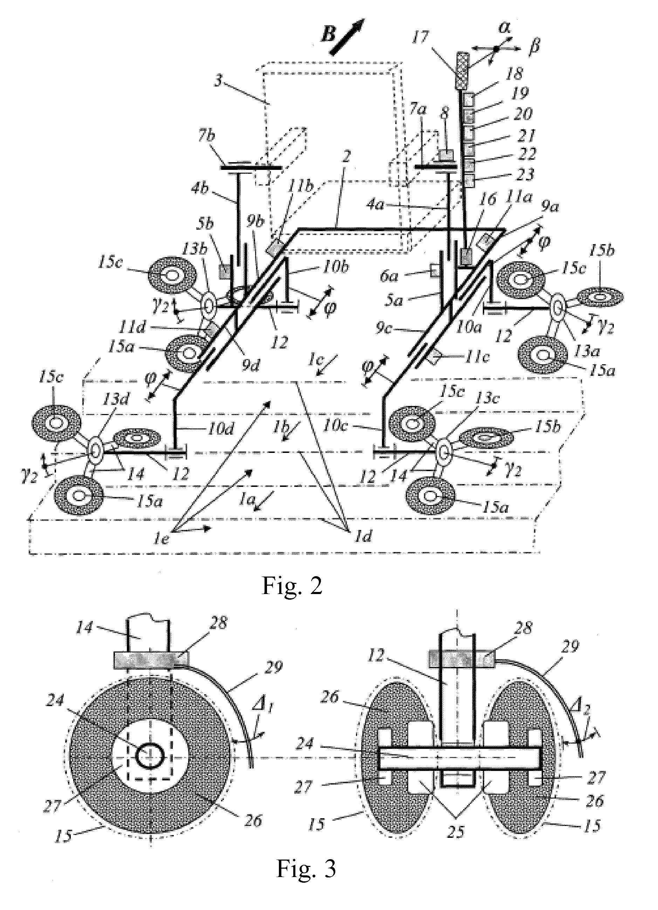

Fig. 3 illustrates a wheeled undercarriage assembly (a side view of a running wheel, on the right in longitudinal vertical section). The wheeled undercarriage assembly (mounted on the end of any arm of the crosspiece) comprises two supporting running wheels ***15*** (dotted lines show the contours of individual wheels). Both wheels are secured immovably on a common horizontal steering wheel axle ***24*.** This axle is fastened on the end of a longitudinal shaft of the crosspiece arm ***14*** with the possibility to be pivoted and to provide the rotation of the running supporting wheels in the vertical plane. The common axle bears two high-strength disks ***25*** (to receive two running wheels on this axle) immovably secured on said axle. Each disk bears, on the external side of the axle, a wheel tire ***26*** fastened to the disk with a binding nut ***27*** tightened on the end of this axle ***24*.** The tires protect the disks on both sides against a contact with the footstep and with the surface of the support in the radial direction (when the load is vertically supported by the wheel tire) and from the external lateral side of the wheel (when the wheel rests on the lateral wheel side in the case of the wheel inclination on the stair footsteps). The arm ***14*** of the crosspiece bears an automatic regulator ***28*** to provide automatic optimal setting of its running wheel onto a calculated point of a stair footstep (enabling the optimal steadiness of the wheelchair while going up and down on the footsteps of stairs, escalators and other vehicles). The automatic regulator bears a spring-actuated contact feeler ***29*** is secured to measure (at a mechanical contact of this feeler with the edge of a stair footstep) the distance ***Δ₁*** at the vertical position of the wheel or the distance ***Δ₂*** when the wheel is turned at 90 degrees to the line of the wheelchair travel. ***Δ₁*** and ***Δ₂*** are the distances between said wheel to the vertical wall and to the edge of the stair footsteps, and with the value of these distances, the detector generates a control signal sent to its automatic regulator ***28*,** which provides for a failure-proof automatic control of the wheelchair travel while going up and down the footsteps of stairs, escalators and other vehicles.

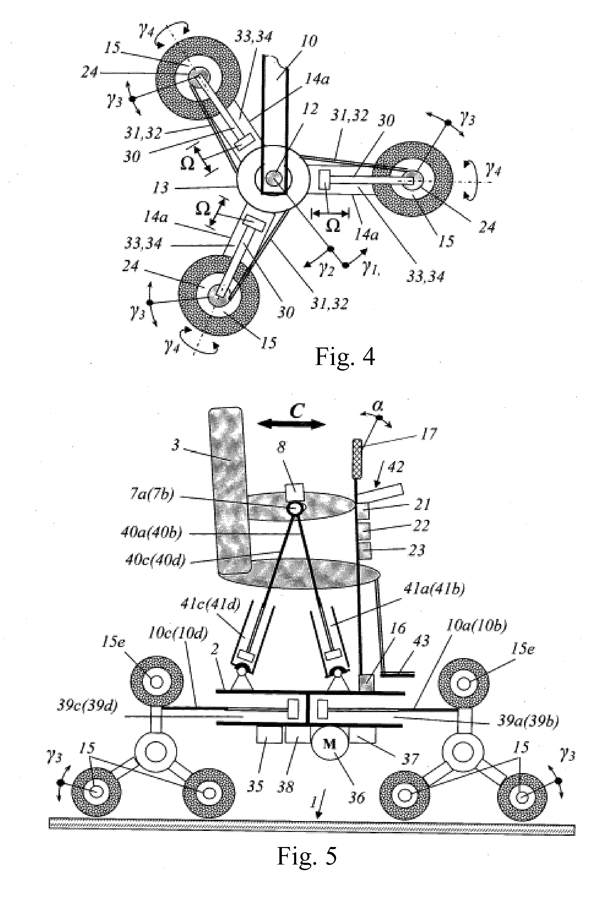

Fig. 4 illustrates a side view of the wheeled undercarriage assembly. Said assembly comprises an angular wheel support ***10*.** An opening in the lower end of the vertical part of this support contains a secured horizontal pivoted shaft ***12*.** This shaft bears an immovably fastened three-armed crosspiece ***13*** with three arms ***14*,** having the possibility to be turned only by its shaft ***12*** in the vertical plane in any direction, for example, when this crosspiece is turned along the arrow ***γ₁*** while going downstairs or when turned along the arrow ***γ***₂ while going upstairs. Along each arm, a longitudinal pivoted axle ***30*** is secured with the possibility to rotate this axle along the arrow ***γ***₄ in the plane perpendicular to this axle. It provides for a wheel steering while maneuvering and changing the traveling direction of the wheelchair to the left or to the right, or while turning the running wheels at 90 degrees in the horizontal plane with blocking these wheels while going up and down stairs at a stepwise rotation mode of the crosspieces. On the external end of a pivoted longitudinal axle ***30*,** each arm of each crosspiece bears a fastened horizontal wheel axle ***24*** (perpendicular to the axle ***30)*** with the running wheel ***15*** immovably fastened on the axle ***24*** with the possibility to steer in any direction each axle ***24*** of its wheel ***15*** along the arrow ***γ***₃ in the plane parallel to the axle ***30*** and to steer in any direction the same wheel along the arrow *γ*₄ in the plane perpendicular to the axle ***30*.** To extend longitudinally all the arms of all the crosspieces (thanks to the longitudinal shift of the longitudinal axle ***30*** of the arm along this arm), a mechanical helical gear ***33*** is made on each arm. The arm bears as well a gear ***31*** mechanically linked to the axle of the running wheel (to provide axial rotation of this wheel at the linear motion of the wheelchair), and a mechanical gear ***32*** mechanically linked to the longitudinal steering axle ***30*** of the arm to rotate this axle in the plane perpendicular to the axle ***30*** (to steer the running wheel in the same plane in different directions along the arrow ***γ₄*).** It provides the pivoted steering and maneuvering of the wheelchair as well as the turning wheels at 90 degrees (for the failure-proof going up and down stairs in the stepping mode, with the turn of the crosspieces). Each mechanical gear ***31*** and ***32*** is made, for example, as a telescopic shaft with conical gears on the end of these shafts. One gear of this kind is placed to transfer turning moments to the longitudinal steering axle, and another one is to transfer turning moments to the horizontal axle of the running wheel. To extend each arm of the crosspiece in operation, this arm bears a helical mechanism ***33*** or a hydraulic cylinder ***34*** mechanically linked to a manual or electric drive to provide the regulation with said drive of the arm length along the arrows in the limits of the distance **Ω** An arm made as a tubular leg ***14a*** is made in one part with the nave of the crosspiece. The mechanism ***33*** or ***34*** is fastened inside this leg on the end of the axle ***30*** closest to the crosspiece axle. In the hydraulic cylinder, the cylinder piston is fastened to the end of the axle ***30*** closest to the crosspiece axle.

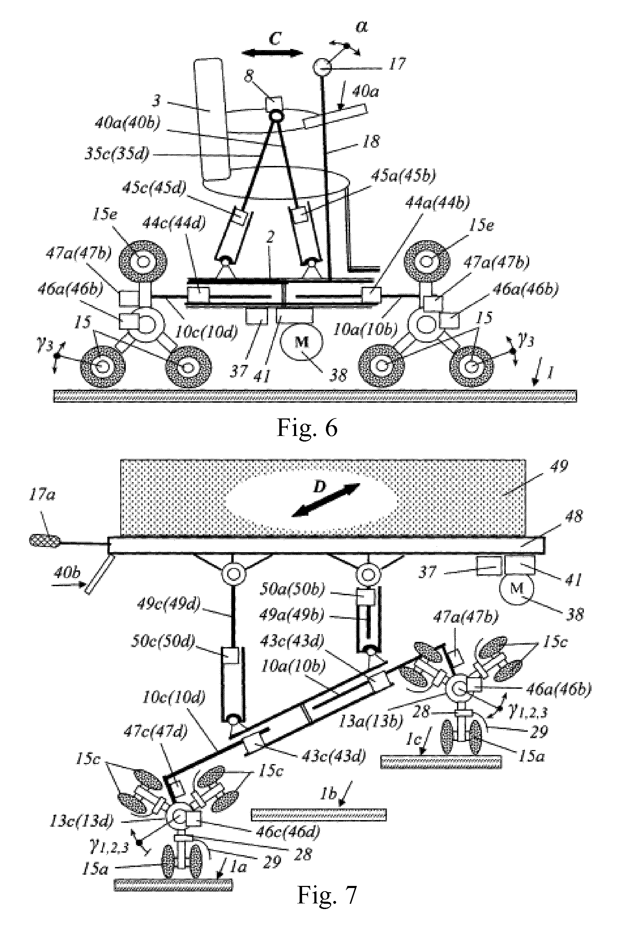

The wheelchair shown in figures 1,2,3,4 is used by the individual accommodated in the chair to be independently transported as follows. The individual sitting in the wheelchair (shown in Fig. 1), before going downstairs along the arrow ***A*,** blocks with ratchet-and-pawl mechanisms any spontaneous turn of all the crosspieces and thoroughly approaches the edge of the upper footstep of the stairs at a safe distance between the front running wheels and the edge of the upper footstep, approximately equal to the footstep width. The individual turns through 90 degrees all the running wheels of the front crosspieces with the steering system. He (she) actuates the ratchet-and-pawl mechanisms blocking the rotation of all the running wheels of the pair of front crosspieces and cutoffs the stops of longitudinal driving apart for the front angular wheel supports and actuates the ratchet-and-pawl mechanism of reverse motion for the running wheels of the pair of rear crosspieces. The wheelchair is moved back by the rear running wheels to provide the optimal longitudinal driving apart of the wheel legs, maximum or known by experience, to enlarge the wheel longitudinal base between the axles of the front and rear axles of crosspieces. He (she) blocks, with the stops on the frame guides, the initial driving apart of the wheel legs. He (she) engages the ratchet-and-pawl mechanisms for a synchronous rotation of crosspieces in the direction of going down the stairs for the wheelchair and blocks with these ratchet-and-pawl mechanisms any spontaneous rotation of the front crosspieces in the same direction. Using the manual drive, he (she) lowers the pairs of upper running supporting wheels of the front crosspiece pair to two neighboring footsteps. While visually checking equal secure distances of these wheels from the vertical walls of these footsteps, he (she) engages the ratchet-and-pawl mechanisms of synchronous regulation of all the arms for all the crosspieces and regulates with the drive the length of each arm until getting equal distances between each two wheels of the front crosspieces resting on two footsteps and the vertical walls of said footsteps. Then he (she) blocks with the stop these arm length against a spontaneous shortening or lengthening while going down, turn the running wheels of the rear crosspieces through 90 degrees. After that, he (she) engages the ratchet-and-pawl mechanism of synchronous rotation with the manual drive for all the crosspieces simultaneously and continues the descent by manual rotation of all the crosspieces until getting the right rest on the upper footstep for the running wheels of the rear crosspieces, while visually checking the planting of a pair of wheels in each rear crosspiece on two upper footsteps. When the distance between these wheels and the vertical walls of the neighboring footsteps is incorrect, these wheels are to be turned around and adjusted under a visual control. With the manual drive, the rear wheel legs are shifted until establishing the optimal longitudinal base between the axes of the front and rear crosspieces (to provide the right planting of all the running wheels on the footsteps while going down stairs). In so doing, one should visually check any inaccuracy of such regulations, and the regulation of the length of this longitudinal base between the crosspieces is repeated, while regulating only the length of the crosspiece arms with manual drives. When going down stairs, the stop of the wheelchair can be used to block any spontaneous vertical position of the chair until the end of the descent. The descent completed, all the mechanisms, all the crosspieces and all the running supporting wheels are to be regulated to their normal position to provide travel across a flat surface (as shown in Figs. 5 and 6).

Going up with the wheelchair on a footstep (shown in Fig. 2) is carried out along the arrow ***B*** in the procedure as follows. The individual (sitting in the chair) drives up on the running supporting wheels of the wheelchair to the stop of the front pair of running wheels against the vertical wall of the first footstep of the stairs. He (she) turns with the steering all the running wheels of the first pair of crosspieces through 90 degrees. He (she) unlocks the stop on the chair to provide self-balancing of the same. He (she) engages the ratchet-and-pawl mechanisms to provide the right synchronous rotation of the front crosspieces, the rotation of all the running wheels of these crosspieces being blocked. He (she) disengages the blocking ratchet-and-pawl mechanisms to provide longitudinal spontaneous drawing apart of the front crosspieces, the rear crosspieces being blocked against any drawing apart. Rotating with the manual drive the front pairs of crosspieces, he (she) goes up on two first footsteps of stairs, engages the ratchet-and-pawl mechanisms and, with the manual drive, synchronously regulates the length of all the arms for all the crosspieces at the same time. Then, he (she) blocks manually with these ratchet-and-pawl mechanisms any modification of the length of these arms for all the crosspieces. Rotating the crosspieces, he (she) lifts the wheelchair to the next footsteps and visually checks a secure planting of the pairs of running wheels of each rear crosspiece onto two lower footsteps. With the manual drive, he (she) adjusts the optimal length of the longitudinal base of the crosspiece axles and blocks the rear wheel legs in the frame guides against their spontaneous drawing apart or drawing together. He (she) turns through 90 degrees all the wheels of the pair of rear crosspieces and lifts the wheelchair upstairs (by swinging the manual drive back and forth) while synchronously rotating all the crosspieces and blocking with the ratchet-and-pawl mechanisms any spontaneous reverse rotation or turning around of the running supporting wheels. Until the end of the lifting process, he (she) controls a secure planting of all the running wheels and, when necessary, adjusts the drawing apart or drawing together of the arms. After getting to a flat site, all the ratchet-and-pawl mechanisms, crosspieces and running wheels are put to their normal position to provide motion across a flat horizontal or inclined surface (as illustrated in Figures 5 and 6).

The wheelchair of Figures 5 or 6 is sown in the position of rolling across a flat surface ***1d*** (in the direction of the arrow ***C***), continuously resting on eight running supporting wheels ***15,*** the four running wheels ***15e*** being lifted and inoperative. Fig. 5 shows a right-side view of an automated electric wheelchair for comfortable control and self-reacting transportation of an subject in the chair sit across a flat surface ***1*** and on stairs (without physical effort of a disabled subject transported on said wheelchair without any servicing person). For this purpose, the frame of such a wheelchair bears: a portable electric accumulator ***35*,** a reversible electric motor ***36*** with a reducer ***37*,** a hydraulic automatic drive comprising an electric hydraulic pump ***38*,** hydraulic cylinders and an automatic system for controlling said hydraulic cylinders on the wheelchair. Respective hydraulic drives ***39a, 39b, 39c*** and ***39d*** are mechanically linked to determined guides ***9a, 9b, 9c*** and ***9d*** of the frame located on one side and to determined wheel legs ***10a, 10b, 10c*** and ***10d*** of the frame located on the other side. These hydraulic drives provide for a longitudinal horizontal shifting and for blocking the position of these legs relative to the frame. On the top of the frame, on the right side of the chair, a vertical right front leg ***40a*** and a vertical right back leg ***40b*** are mounted to provide support of the chair by the frame. On the left side of this chair, a vertical left front leg ***40c*** and a left back leg ***40d*** are mounted on the frame top. From below, said legs are attached to the frame pivots. At the top, the right legs are fastened to the common horizontal right axle ***7a*** in the right chair arm rest, the left legs being fastened to the common left axle of the chair ***7b*** (in the left arm rest of this chair). The lower end of each hydraulic drive is attached to a frame pivot. The chair supported by these legs is suspended like a pendulum with the possibility of its oscillation on the axles ***7a*** and ***7b*** in the longitudinal vertical plane to provide an independent vertical aligning under the total weight of the chair with the individual sitting in the same. Such a horizontal axle bears a manual stop ***8*** to stabilize the vertical position of the chair, comfortable for the individual sitting in the same. In the lower part, each leg is mechanically attached to its hydraulic drive (the leg ***40a*** is attached to the drive ***41a,*** the leg ***40b*** to the hydraulic drive ***41b,*** the leg ***40c*** to the hydraulic drive ***41c*** and the leg ***40d*** to the hydraulic drive ***41d).*** Each arm of the crosspieces, before the running wheel, a feeler ***29*** and an automatic regulator ***28*** are mounted (as depicted in Fig. 3). The automatic regulator ***28*** communicates electrically with a panel ***42*** of electric regulation (mounted in the chair arm rest). The panel ***42*** is electrically linked to the hydraulic drive. To provide automatic longitudinal extension or shortening of this arm in operation after a signal from the feeler, inside each arm only a hydraulic cylinder ***3*4** is mounted (according to Fig. 4) connected to the system of automatic drive and to the panel of electric regulation ***42*.** Each arm bears mechanical gears ***31*** or ***32*** to transmit rotary motions from the redactor to the longitudinal axle ***30*** of the arm to provide turning of the wheelchair and maneuvering the same relative to the horizontal axle ***24*** of the running wheel, and to provide the travel on the running wheels across a flat surface. The frame bears ratchet-and-pawl mechanisms to control the rotation direction and to lock the crosspieces and the turn and rotation of the running wheels to provide a failure-proof going up and down of the wheelchair on stairs. A foot support ***43*** is mounted on the chair to provide support for the feet of the individual sitting in the chair. The wheels ***15e*** are lifted above the supporting surface to the inoperative position. The wheelchair runs on the flat surface ***1*** with eight wheels ***15,*** all the running wheels ***15*** rotating in the direction ***γ₃*.** The lever ***17*** is designed only for manual steering, oscillating the same along the arrow **α** (to provide turning of the wheels only in the horizontal plane). The commutators with the ratchet-and-pawl mechanisms *21, **22*** and ***23*,** mounted on this lever are designed to provide a manual control, respectively, of the rotation direction and of the crosspieces blocking, of the steering direction and of the running wheels blocking against steering, and of the rotation direction and the running wheels blocking against a linear motion of the wheelchair. The control panel ***40a*** is made with an automatic programmed control of all the ratchet-and-pawl mechanisms, of operation modes and of operation sequences (similar to the sequence of the wheelchair operation depicted in Figures 1 and 2). But the commutation of all these mentioned mechanisms and regulators of mechanical systems is provided by the automatic regulation from the panel to enable automatic travel with a visual control, and only with the manual steering of the running wheels in the modes of traveling on a flat surface, as well as of going up and down on the footsteps of stairs, escalators and other vehicles.

Fig. 6 shows a right-side view of a completely electric automated wheelchair containing a portable electric accumulator ***35*,** a reversible electric motor ***36*** with a reducer ***37*** and a panel ***42a*** of electronic regulation of all the electric drives to provide a comfortable transport of an individual. Respective electric drives ***44a, 44b, 44c*** and ***44d*** are mechanically linked to determined guides ***9a, 9b, 9c*** and ***9d*** of the frame located on one side and to determined wheel legs ***10a, 10b, 10c*** and ***10d*** of the frame located on the other side, to provide for a longitudinal horizontal shifting and for blocking the position of these legs relative to the frame. This chair is suspended like a pendulum on the top of the frame (similarly in Fig.5), on the legs ***40a, 40b, 40c*** and ***40d*** and on the horizontal axles located in the chair arm rests. A stop 8 on the chair axis is designed to stabilize the vertical comfortable position of the individual accommodated in the chair. In the lower part, each leg is mechanically linked to its helical reversible electric drive: the leg ***40a*** is linked to the electric drive ***45a,*** the leg ***40b*** to the electric drive ***45b,*** the leg ***40c*** to the electric drive ***45c*** and the leg ***40d*** to the electric drive ***45d.*** These drives are pivotally attached to the frame. To regulate the length of each arm ***14*** of each crosspiece ***13*** (as shown in Fig. 4), a reversible electric drive ***46*** is mounted in each arm to rotate these crosspieces. To provide rotation of the running wheels, each crosspiece bears a reversible electric drive ***47*,** and on the arms of the crosspieces, mechanical gears ***31*** and ***32*** are mounted to turn the wheels when steering and rotating the same while running the wheelchair on these wheels. The control system utilizes electric regulators connected to the control panel (to provide the right rotation of the crosspieces and of the wheels and the locking of the same). The lever ***17*** (pivotally attached to the frame) is designed to steer with the rotation of the running wheels. The failure-free travel and stability of the wheelchair on stairs are automatically provided by the programmed automatic control of all the mechanisms and electric drives without intervention of the subject sitting in the chair, and without any assistance of a servicing person.

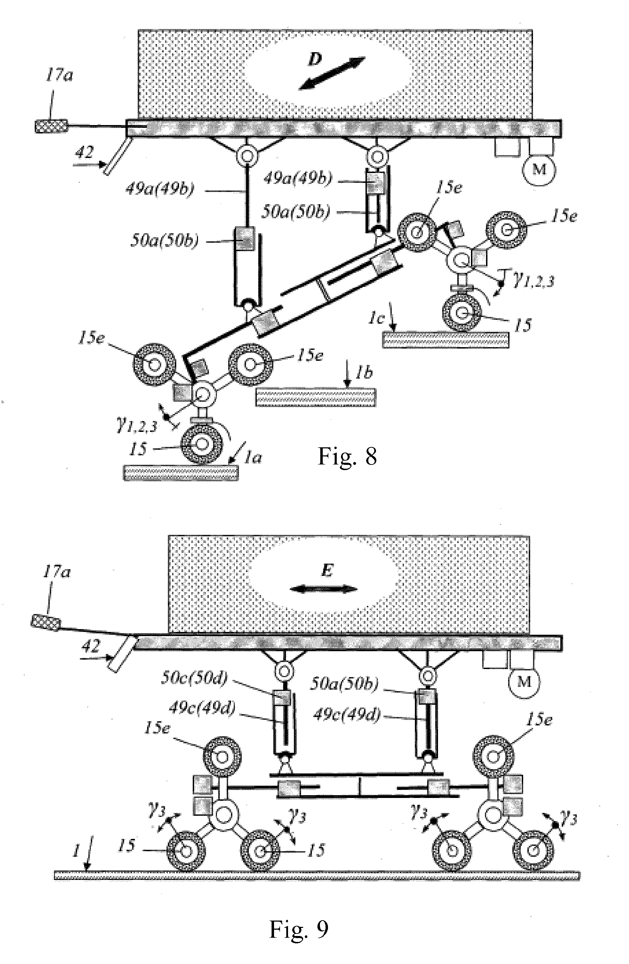

In Fig. 7, a cargo cart is shown while going upstairs along the arrow ***D*** (in a stepping mode, only with rotating crosspieces, the running wheels being blocked against rotation and turned parallel to the length of the stair footsteps). Fig. 8 shows the same cart while going downstairs along the arrow ***D*** in a stepping mode of rotating crosspieces and running wheels (turned longitudinally to the direction of going up). Fig. 9 shows the same cargo cart while rolling along the arrow ***E*** across a flat surface on 8 running wheels ***15).*** In Fig. 7, the mechanical components and the drives as well as the operation procedures and the automatic regulations of loads on the cargo cart are similar as to the structure of the wheelchair shown in the above described Fig. 6. Fig. 7 shows a cargo chart with goods ***49*** (on a load carrying construction ***47**)*. The load carrying construction is aligned horizontally with the help of four high-duty legs ***49a, 49b, 49c*** and ***49d*** provided with respective powerful electric drives ***50a, 50b, 50c*** and ***50d*** to adjust the height of these legs for balancing the load carrying construction to provide a failure-free transporting thanks to the maximum steadiness of the cart (provided by the optimal location of the gravity center in the center or in the optimal point of the cart resting on the supporting footstep surface with all the supporting running wheels ***15*** when the cart is longitudinally inclined on the stairs while going up and down footsteps of stairs, escalators and other vehicles). Transporting goods on this cart is provided remotely by a portable or vehicle-borne electronic panel of remote programmed control ***40b.*** The panel provides for an automatic control of all the mechanisms of lifting devices, selection and control of all the travel modes of a cargo cart, remote steering and maneuvering of the cart, as well as loading and unloading goods on the cart with a crane or a hoist, without any physical force of an individual. The individual only actuates with the panel the needed operation mode and the direction of traveling across a flat surface and that of going up and down the footsteps of stairs, escalators and other vehicles, with the modes of loading and unloading.

### Industrial applicability

The designs of the transporting device of the present invention may be easily calculated with the use of known standard methods and manufactured in a large-scale production on the basis of existing components, with standard equipment and with the use of standard technologies. Such transporting devices have been long produced by various companies in the world.

## Claims

1. Transportation device for transporting goods on stairs and flat surfaces comprises a frame accommodating a goods-supporting structure for fastening goods or a chair with a seat for an individual; said frame bears on its bottom side a secured wheeled undercarriage with running supporting wheels able to rotate in any direction and lifting mechanisms to lift the transportation device on stairs, comprising mechanical or electrical drives with a system to control these drives providing regulation and control of said lifting mechanisms; on the bottom part of said frame, a horizontal pivot shaft is secured, this shaft supporting a three-armed crosspiece immovably secured to the same, presenting three similar arms immovably secured on a nave of their crosspiece and arranged in the vertical plane with equal radial angles between said arms; the horizontal pivot shaft is secured on the end of each arm perpendicular to the axis of the same; a running supporting wheel is immovably secured on said shaft such that this wheel axis may rotate in any direction; the drive is mechanically attached to the crosspiece axle and to the axle of the running supporting wheels of said crosspiece to provide rotation of the crosspiece and of the wheels during the processes of ascending or descending the transportation device on footsteps of stairs as a result of the transportation device resting on footsteps of stairs with said wheels; **characterized in that** the wheeled undercarriage is made of four three-armed crosspieces with running supporting wheels on each arm of each crosspiece; on the left-side and the right-side of the frame front, as well as on the left-side and on the right-side of the frame back, individual horizontal longitudinal guides are fastened therein; each guide bears a wheel support secured thereon movably in the horizontal and longitudinal direction and made as an angle, the horizontal part of the support being located in this guide, and the horizontal pivot shaft is attached to the vertical part of said wheel support on its lower end, said shaft bearing the three-armed crosspiece immovably fastened thereto; on each guide, a manual mechanical or hydraulic or electric drive is located for moving a wheel leg along the frame longitudinally and horizontally to control the length of longitudinal left and right bases between the crosspiece pair axles on the left and on the right to put all the running wheels onto the points of failure-proof rest on the footsteps of stairs, escalators and other vehicles, as well as to transfer the gravity center of the transportation device carrying goods or an individual in the chair in the direction from the center of the bearing surface area to the running wheels upstairs; the axle of each crosspiece is linked by a mechanical transmission with the mechanical or electric drive to provide a self-reacting or synchronous rotation of the crosspiece with said axle; a steering system is mounted on the frame to provide self-reacting steering by a servicing man or an individual sitting in the chair of the front and/or back pairs of supporting running wheels; for this purpose, the wheel axle is mounted on the end of a longitudinal axis of each arm such that the wheel axle may rotate about said longitudinal axis; the longitudinal axle is mechanically linked to the steering system to provide a synchronous steering of all the wheels on one pair of crosspieces or on all the crosspieces simultaneously.

2. Transportation device of claim 1 **characterized in that** each arm of all the crosspieces is made with the possibility to provide synchronous simultaneous regulation of the length for all the arms in each crosspiece, for this purpose, each arm of each crosspiece is made with a mechanical or hydraulic or electric drive to lengthen or to shorten the arm length, the distance between the axles of each running wheel and the axle of its crosspiece being respectively lengthened or shortened; in front of each running supporting wheel, on each arm of the crosspieces, a feeler is fixed to contact the edges of footsteps on stairs, escalators and other vehicles and to provide a control signal of the value of the distance from this wheel to said edge; the transportation device bears an automatic regulator linked to all the feelers to receive these control signals and to all the drives regulating the arm length and linked to the drives for longitudinal and horizontal moving of the wheel supports, to provide automatic regulation of the length of the longitudinal left and right bases between the crosspieces axles, respectively, from the left and right sides, to provide automatic positioning of all the supporting running wheels closer to the vertical wall of footsteps to increase the steadiness of the transporting device while going up and down stairs.

3. Transportation device of claim 1 **characterized in that** the drives are provided with automatic blocking mechanisms, for example, ratchet-and-pawl mechanisms the changeover of which is made by a servicing person or an individual occupying the wheelchair; these mechanisms are configured to block the reverse motion of the crosspieces and the reverse motion of the running supporting wheels, as well as to block any emergency spontaneous or steered horizontal turning of the wheels while going up and down on footsteps of stairs and while moving across a flat surface.

4. Transportation device of claim 1 **characterized in that** the frame bears vertical legs secured on the left and on the right; a horizontal axle is secured on the upper end of each leg; on these axles, a chair for accommodating a sitting individual is secured such that this chair accommodating a sitting individual may constantly recover the vertical position of the chair with the individual in the way of a pendulum thanks to the location of the chair common gravity center below the foothold line of the same on said axles at the inclination of the transportation device while going up and down stairs.

5. Transportation device of claim 4 **characterized in that** the system of legs for fastening the load-carrying structure or the chair is made, for example, with four legs having a manual or mechanical, or hydraulic, or electric semiautomatic or automatic drive to provide longitudinal modification of the length of these legs such that the goods disposition on the transportation device or the position of the chair accommodating an individual may be aligned in the horizontal or vertical planes, and/or to control the height of these goods or of this chair accommodating an individual, and/or to displace the goods or the chair accommodating an individual along the frame for increasing steadiness of the transportation device on stairs.

6. Transportation device of claim 1 **characterized in that** said frame is made with guides extensible in the transversal direction in order to secure the wheel legs such that an internal free space is formed to bear goods or an individual on the surface of the transportation device and in the middle of the same before loading these goods or the individual onto a load-supporting structure; the extensible guides of the frame are made with a mechanical or hydraulic, or electric drive to provide their transversal extension or retraction, a hoisting crane or a winch is secured on the frame with a mechanism for fastening goods on the floor or ground level, or at a higher level to lift and to transfer these goods or the individual onto a vehicle, or to transfer, with the use of mechanisms, the goods or the individual onto another support.

7. Transportation device of claim 1 **characterized in that** the wheeled undercarriage is made with a mechanism of horizontal steering of supporting wheels in different directions at 90 and 180 degrees to provide an autonomous turn of the transportation device on the spot or its hairpin turn on a small area, and/or its lateral shift on footsteps of stairs, escalators and other vehicles, for this purpose, the transportation device comprises mechanisms for blocking rotation of axles for determined or for all the running wheels.

8. Transportation device of claim 1 **characterized in that** it comprises mechanisms for blocking rotation of axles for determined or for all the running supporting wheels to provide for a failure-proof autonomous going up and down of this transportation device on the footsteps of stairs thanks to the turn of crosspieces with the wheels turned in parallel to the length of these footsteps, the feelers being immovably secured between each wheel and the vertical wall of the closest footstep.

9. Transportation device of claim 1 **characterized in that** it comprises a portable electric accumulator, electric reversible motors, automatic drives and a programmed panel for semiautomatic and/or automatic control of the travel direction and of the modes of transporting goods or an individual for this transportation device.
